# EUROPÄISCHE PATENTANMELDUNG

(11) **EP 4 296 011 A1**
(43) Veröffentlichungstag der Anmeldung: **27.12.2023**
(21) Anmeldenummer: 23175212.2
(22) Anmeldetag: 25.05.2023
(51) Int. Cl.: B25J 5/00, B25J 9/02, B25J 9/04, B25J 15/00, B25J 15/06, B25J 15/10, B25J 19/02, D01H 9/18, B25J 13/08, B25J 15/02

(54) **FAHRERLOSES TRANSPORTFAHRZEUG**

(30) Priorität: 21.06.2022 LU 502324
(71) Anmelder: Saurer Technologies GmbH & Co. KG, 47804 Krefeld (DE)
(72) Erfinder: Schauenburg, Markus, 73098 Rechberghausen (DE); Stitz, Albert, 51515 Kürten (DE)
(74) Vertreter: Morgenthum-Neurode, Mirko

(57) **Zusammenfassung**

Die Erfindung betrifft ein fahrerloses Transportfahrzeug zum autonomen Transport und Wechseln mindestens einer Spinnkanne. Um ein fahrerloses Transportfahrzeug bereitzustellen, welches in zuverlässiger Weise eine automatisierte Versorgung der Faserband gespeisten Spinnereimaschinen gewährleistet, ist vorgesehen, dass dieses einen autonomen Fahrantrieb, eine Transportplattform zur Aufnahme der mindestens einen Spinnkanne, und eine Manipulatoreinheit zum Aufnehmen und Absetzen der mindestens einen Spinnkanne aufweist, wobei die Manipulatoreinheit einen Greifer zur Erfassung der Spinnkanne und eine Stelleinrichtung zur Verstellung des Greifers aufweist.

## Beschreibung

Die Erfindung betrifft ein fahrerloses Transportfahrzeug zum autonomen Transport und Wechseln mindestens einer Spinnkanne.

Aus dem Stand der Technik ist es bereits bekannt, zum Transport mindestens einer Spinnkanne zwischen einer Faserband abliefernden Spinnereimaschine und einer Faserband gespeisten Spinnereimaschine einen Transportwagen vorzusehen. Üblicherweise erfolgt dabei die Verstellung des Transportwagens zwischen den Spinnereimaschinen sowie dessen Be- und Entladung durch einen Bediener, welcher die mit Faserband befüllten Spinnkannen an der Faserband abliefernden Spinnereimaschine auf dem Transportfahrzeug platziert und an der Faserband gespeisten Spinnereimaschine von diesem entnimmt und an geeigneter Stelle platziert. Eine kontinuierliche Bereitstellung von Faserband in der Faserband gespeisten Spinnereimaschine ist somit personalabhängig, was in der Folge zu einer unzuverlässigen Versorgung der Faserband gespeisten Spinnereimaschine und ggf. zu einem Produktionsstillstand führen kann.

Hiervon ausgehend liegt der Erfindung die Aufgabe zugrunde, ein fahrerloses Transportfahrzeug bereitzustellen, welches in zuverlässiger Weise eine automatisierte Versorgung der Faserband gespeisten Spinnereimaschine gewährleistet.

Die Erfindung löst die Aufgabe durch ein fahrerloses Transportfahrzeug mit den Merkmalen des Anspruchs 1. Vorteilhafte Weiterbildungen der Erfindung sind in den abhängigen Ansprüchen angegeben.

Erfindungsgemäß umfasst das fahrerlose Transportfahrzeug zum autonomen Transport und Wechseln mindestens einer Spinnkanne
- einen autonomen Fahrantrieb,
- eine Transportplattform zur Aufnahme der mindestens einen Spinnkanne, und
- eine autonome Manipulatoreinheit zum Aufnehmen und Absetzen der mindestens einen Spinnkanne, wobei die Manipulatoreinheit einen Greifer zur Erfassung der Spinnkanne und eine Stelleinrichtung zur ortsveränderlichen Verstellung des Greifers aufweist.

Der Fahrantrieb nach der vorliegenden Erfindung ist ausgebildet, autonom zu einer definierten Position zu fahren und insbesondere weiter bevorzugt, seinen Zielort, also welche Ablaufspule anzufahren ist, selbsttätig festzulegen. Fahrerlose Transportfahrzeuge sind weithin bekannt. Diese werden in einem Kollektiv, zentral oder jeweils einzeln gesteuert, um zu definierten Positionen oder Orten zu verfahren. Bei einer kollektiven Steuerung sind wenigstens zwei fahrerlose Transportfahrzeuge kommunikativ miteinander derart verbunden, dass jeweilige Zielorte innerhalb des Kollektivs koordiniert und für die einzelnen Transportfahrzeuge festgelegt werden. Dazu weist jedes fahrerlose Transportfahrzeug eine Steuereinheit auf, wobei die Steuereinheiten der Transportfahrzeuge kommunikativ ohne eine erforderliche Einbindung einer übergeordneten Steuerung miteinander zum Austausch von Informationen für das koordinierte und effiziente Festlegen der Zielorte und des Verfahrens zu diesen verbunden sind. Dahingegen werden die Zielorte und auch die Verfahrwege der fahrerlosen Transportfahrzeuge bei einer zentralen Steuerung über diese koordiniert. Alternativ dazu kann jedes fahrerlose Transportfahrzeug ausgestaltet sein, seinen Zielort und Verfahrweg selbsttätig festzulegen. Dies kann insbesondere dadurch erreicht werden, dass das fahrerlose Transportfahrzeug eine Sensorik aufweist, mittels welcher die Textilmaschine auf zeitnah leerlaufende Spinnkannen überprüft, wobei die Sensorik weiter bevorzugt mit der Steuereinheit des fahrerlosen Transportfahrzeuges kommunikativ verbunden ist und die Steuereinheit ausgelegt ist, basierend auf den sensorisch erfassten Informationen auszuwerten und festzulegen, an welcher Spinnstelle wann und welche Handlung, bspw. die nächste Handlung wie der Spinnkannenaustausch ansteht. Alternativ oder zusätzlich kann diese Information nach einer weiteren bevorzugten Ausführungsform von einer Steuereinheit übermittelt werden, welche außerhalb des fahrerlosen Transportfahrzeuges angeordnet und mit der Steuereinheit des fahrerlosen Transportfahrzeuges kommunikativ verbunden ist.

Der Fahrantrieb des Transportfahrzeugs ist ausgebildet, dieses autonom wenigstens zwischen der Faserband abliefernden und der Faserband gespeisten Spinnereimaschine zu verfahren und insbesondere weiter bevorzugt, seinen Zielort, also welche Position an welcher Spinnereimaschine anzufahren ist, selbsttätig festzulegen. Fahrerlose Transportfahrzeuge sind weithin bekannt. Diese werden üblicherweise in einem Kollektiv, zentral oder jeweils einzeln gesteuert, um zu definierten Positionen oder Orten zu verfahren. Die Fahreinheit des fahrerlosen Transportfahrzeugs nach der vorliegenden Erfindung kann dementsprechend ausgebildet sein. Bei einer kollektiven Steuerung sind beispielsweise wenigstens zwei fahrerlose Transportfahrzeuge kommunikativ miteinander derart verbindbar, dass jeweilige Zielorte innerhalb des Kollektivs koordiniert und für die einzelnen Transportfahrzeuge festgelegt werden können. Dazu weist das fahrerlose Transportfahrzeug nach der vorliegenden Erfindung vorzugsweise eine Steuereinheit für den Fahrantrieb auf, wobei die Steuereinheit kommunikativ ohne eine erforderliche Einbindung einer übergeordneten Steuerung mit der Steuereinheit eines weiteren fahrerlosen Transportfahrzeuges zum Austausch von Informationen für das koordinierte und effiziente Festlegen der Zielorte und des autonomen Verfahrens zu diesen verbindbar ist.

Bei einer alternativ bevorzugten Ausführungsform werden Zielorte und auch Verfahrwege des fahrerlosen Transportfahrzeugs über eine Leitsteuerung zentral koordiniert. Zur Steuerung des Fahrantriebs, wie vorzugsweise auch der autonomen Manipulatoreinheit, mittels der die mindestens eine Spinnkanne zwischen der Transportplattform und den Spinnereimaschinen verstellt wird, sind diese nach dieser bevorzugten Ausführungsform mit einer Leitsteuerung verbindbar. Hierbei handelt es sich um eine dem Transportfahrzeug ferne Steuereinheit, welche weiter bevorzugt zur Überwachung und Steuerung verschiedener Produktionsabläufe verwendet werden kann. Die Leitsteuerung kann weiter bevorzugt mit der Faserband liefernden und/oder Faserband gespeisten Spinnereimaschine verbunden sein, wobei gemäß der bevorzugten letzteren Ausführungsform das fahrerlose Transportfahrzeug derart gesteuert werden kann, dass das an den Faserband liefernden Spinnereimaschine in Spinnkannen bereitgestellte Faserband bedarfsgerecht an den Faserband gespeisten Spinnereimaschine mittels des fahrerlosen Transportfahrzeuges bereitstellbar ist, wodurch Produktionsunterbrechungen zuverlässig vorgebeugt werden können. Die Verbindung des fahrerlosen Transportfahrzeugs und dessen zu steuernder Aggregate mit der Leitsteuerung erfolgt dabei in bevorzugter Weise über eine drahtlose Datenverbindung, welche eine ausreichende Autonomie des fahrerlosen Transportfahrzeugs gewährleistet.

Weiterhin alternativ kann nach einer bevorzugten Ausführungsform das fahrerlose Transportfahrzeug ausgestaltet sein, seinen Zielort und Verfahrweg selbsttätig festzulegen. Dies kann insbesondere dadurch erreicht werden, dass das fahrerlose Transportfahrzeug eine Sensorik aufweist, mittels welcher eine Spinnereimaschine auf zeitnah befüllte oder leerlaufende Spinnkannen überprüft wird, wobei die Sensorik weiter bevorzugt mit der Steuereinheit des fahrerlosen Transportfahrzeuges kommunikativ verbunden ist und die Steuereinheit ausgelegt ist, basierend auf den sensorisch erfassten Informationen auszuwerten und festzulegen, an welcher Spinnereimaschine wann und welche Handlung, bspw. als nächste Handlung das Abholen mindestens einer befüllten Spinnkanne oder der Austausch einer leeren Spinnkanne mit einer befüllten Spinnkanne, ansteht. Alternativ oder zusätzlich kann diese Information nach einer weiteren bevorzugten Ausführungsform von einer Steuereinheit übermittelt werden, welche außerhalb des fahrerlosen Transportfahrzeuges angeordnet und mit der Steuereinheit des fahrerlosen Transportfahrzeuges kommunikativ verbunden ist.

Nach einer bevorzugten Ausführungsform umfasst das Transportfahrzeug wenigstens eine Steuereinheit zur Steuerung der autonomen Fahreinheit sowie eine Steuereinheit zur Steuerung der autonomen Manipulatoreinheit, wobei diese beiden Steuereinheiten weiter bevorzugt miteinander kommunikativ per Kabel oder drahtlos verbunden sind. Die Anordnung der Steuereinheiten für die Fahreinheit und für die Manipulatoreinheit auf dem Transportfahrzeug kann bedarfsgerecht erfolgen und begünstigt weiter eine vollkommen autonome Funktionalität des Transportfahrzeuges. So kann dieses bspw. über die Steuereinheit für die Fahreinheit selbsttätig zu definierten Positionen innerhalb der Textilfabrik, insbesondere zu definierten Arbeitsstellen oder Positionen der Spinnereimaschine, fahren, wobei die definierte Position von extern des Transportfahrzeuges, beispielsweise der Leitsteuerung, vorgebbar ist. Nach Erreichen der definierten Position kann vorzugsweise über die Information des Erreichens der definierten Position von der Betriebssteuereinrichtung der Fahreinheit oder alternativ oder zusätzlich über von an dem Transportfahrzeug oder am Zielort angeordneten Sensoriken erfassten Daten zum Bestätigen des Erreichens der definierten Position die Manipulatoreinheit unmittelbar mit ihrer Handhabung beginnen.

Zur Verstellung der Spinnkannen zwischen der Transportplattform und den Spinnereimaschinen, d. h. unter anderem zur Aufnahme der mindestens einen mit Faserband befüllten Spinnkanne an den Faserband abliefernden Spinnereimaschine sowie zur Positionierung der mindestens einen Spinnkanne an den Faserband gespeisten Spinnereimaschine weist das erfindungsgemäße fahrerlose Transportfahrzeug die Manipulatoreinheit auf. Wesentliche Bestandteile der Manipulatoreinheit sind dabei deren Greifer zur Erfassung der mindestens einen Spinnkanne und deren Stelleinrichtung zur Positionierung des Greifers gegenüber der Transportplattform. Zur Aufnahme der mindestens einen Spinnkanne erfolgt mittels der Stelleinrichtung eine Verstellung des Greifers in eine Position, in der dieser die mindestens eine Spinnkanne durch eine entsprechende Verstellung des Greifers ergreifen kann. Die Spinnkanne kann anschließend durch eine erneute Verstellung der Stelleinrichtung auf der Transportplattform des fahrerlosen Transportfahrzeugs definiert positioniert werden. Im Anschluss an eine Verstellung bzw. Verfahrens des Transportfahrzeugs von der Faserband abliefernden Spinnereimaschine zu der Faserband gespeisten Spinnereimaschine erfolgt in umgekehrter Reihenfolge eine definierte Verlagerung der mindestens einen Spinnkanne von der Transportplattform in den Einflussbereich der Faserband gespeisten Spinnereimaschine, wobei mittels der Stelleinrichtung die durch den Greifer ergriffene Spinnkanne entsprechend positioniert und durch eine Verstellung des Greifers freigegeben wird.

Die Manipulatoreinheit kann in bevorzugter Weise durch einen kollaborativen Roboter, auch bekannt als Cobot, mit einem die Stelleinrichtung ausbildenden Roboterarm und einer den Greifer ausbildenden Roboterhand, ausgestaltet sein. Ein solcher Cobot hat den Vorteil, dass dieser ohne sonst übliche Schutzvorkehrungen mit einem Bediener in der Textilfabrik in einem gemeinsamen Umfeld ohne Käfige bzw. Schutzeinrichtungen ohne Weiteres interagieren kann und den Bediener bei komplexen Aufgaben, die nicht vollständig automatisierbar sind, assistieren kann. Dazu sind solche Cobots gegenüber sonstigen Robotereinrichtungen mit Sensoriken ausgestattet, welche eine Abschaltung des Cobots bewirken, sofern der Cobot in Berührung mit definierten Hindernissen gelangt. Dadurch können Verletzungen beim Bediener zuverlässig verhindert werden.

Der Roboterarm kann vorzugsweise modulartig gelenkig zusammengesetzt sein. So kann der Roboterarm bedarfsgerecht um wenigstens einen weiteren Armabschnitt verlängert oder verkürzt werden, um die Reichweite bedarfsgerecht anpassen zu können. Die modulartig gelenkige Zusammensetzung kann beispielsweise über kugelgelenkartige Kopplungen erfolgen, welche in weiter bevorzugter Weise Schleifkontakte zur Durchleitung von Informationen und/oder der Energieversorgung aufweisen können. Auch kann wenigstens ein Armabschnitt vorzugsweise einen ein- und ausfahrbaren Teilabschnitt umfassen, wodurch eine vereinfachte Reichweitenanpassung ermöglicht wird. In weiterhin bevorzugter Weise kann der Greifer auswechselbar an dem Roboterarm angebunden sein.

Gemäß einer bevorzugten Ausführungsform umfasst das Transportfahrzeug, im Besonderen die Manipulatoreinheit, wenigstens ein Erfassungssystem, insbesondere ein Bildverarbeitungssystem, mittels welcher ein definierter Umgebungsbereich des Transportfahrzeuges und/oder ein definierter Arbeitsbereich der Manipulatoreinheit sensorisch, insbesondere optisch überwachbar, weiter bevorzugt speicherbar überwach- und aufnehmbar, ist. Besonders bevorzugt ist das Erfassungssystem an dem Transportfahrzeug oder an der Manipulatoreinheit derart angeordnet, dass der Arbeitsbereich, sprich ein Handhabungsbereich der Manipulatoreinheit, im Besonderen des Greifers überwachbar bzw. aufnehmbar ist. Vorzugsweise ist das Erfassungssystem nahe oder an dem Greifer außerhalb diesem angeordnet. Weiterhin bevorzugt kann eine Empfängereinheit des Erfassungssystems, beispielsweise eine Bildaufnahmeeinheit des Bildverarbeitungssystems, an einem den Greifer tragenden Armabschnitt oder an einem diesen Armabschnitt und den Greifer miteinander verbindenden Gelenk angeordnet sein. Die Anordnung der Bildaufnahmeeinheit kann frei gewählt sein. Wesentlich für die Anordnung der Bildaufnahmeeinheit ist die Überwachungsmöglichkeit des Arbeitsbereiches des Greifers, wobei die Bildaufnahmeeinheit vorzugsweise derart angeordnet ist, dass eine Bildaufnahmemittenachse inkongruent zu einer Halteachse des Greifers ist. Unter einer Halteachse des Greifers wird diejenige Achse verstanden, welche zwischen Greifelementen des Greifers verläuft und auf welche sich wenigstens einer der Greifelemente zu bewegt, um ein Objekt bzw. einen Gegenstand in Verbindung mit den übrigen Greifelementen zu greifen. In einem ein Objekt erfassenden Greifzustand des Greifers verläuft die Halteachse durch das Objekt. In einem objektfreien Zustand des Greifers verläuft die Halteachse in einem von den Greifelementen eingegrenzten Bereich.

Weiterhin bevorzugt ist das Erfassungssystem mit einer Steuereinheit der Manipulatoreinheit kommunikativ verbunden, wobei die Steuereinheit ausgelegt ist, die Manipulatoreinheit basierend auf Informationen des Erfassungssystems autonom zu steuern. Vorzugsweise kann ein Wissensspeicher vorgesehen sein, welcher mit der Steuereinheit derart kommunikativ verbunden ist, dass die Steuereinheit Informationen des Erfassungssystems mit im Wissensspeicher hinterlegten Informationen vergleicht und basierend auf diesem Vergleich die Manipulatoreinheit definiert ansteuert.

Weiterhin bevorzugt ist das Erfassungssystem allein oder in Kombination mit der Steuereinheit ausgelegt, mit im Arbeitsbereich der Manipulatoreinheit definiert positionierten Markierungen zusammenzuwirken. Damit kann die Manipulatoreinheit zu exakt ausführbaren Handhabungen innerhalb des von den Markierungen definierten Markierungsbereiches angesteuert werden. Fehlbewegungen lassen sich somit weitestgehend vermeiden, wodurch die Produktivität gesteigert werden kann.

Das erfindungsgemäße fahrerlose Transportfahrzeug erlaubt eine bedarfsgerechte autonome, personalunabhängige Versorgung der Faserband speisenden und gespeisten Spinnereimaschinen, sodass in zuverlässiger Weise ein Stillstand infolge eines Leerlaufens der Faserband gespeisten Spinnereimaschine vermieden werden kann. Die autonome Ausgestaltung des Fahrantriebs und der Manipulatoreinheit erlaubt es, vollständig auf Bedienpersonal, sowohl zur Verstellung des Transportfahrzeugs, als auch zum Be- und Entladen der mindestens einen Spinnkanne zu verzichten.

Die Ausgestaltung der Stelleinrichtung derart, dass durch diese der Greifer in eine zur Aufnahme sowie zum Absetzen der Spinnkanne vorgesehenen Position verstellt werden kann, ist grundsätzlich frei wählbar. Nach einer bevorzugten Weiterbildung der Erfindung ist vorgesehen, dass die Stelleinrichtung zur Verstellung des Greifers zur mehrachsigen Verfahrbarkeit des Greifers gegenüber der Transportplattform ausgebildet ist und/oder einen gelenkig gegenüber der Transportplattform verstellbaren Greifarm aufweist.

Im Falle der Ausgestaltung der Stelleinrichtung zur mehrachsigen Verfahrbarkeit des Greifers ist diese vorzugsweise derart ausgestaltet, dass durch geeignete lineare und/oder rotierende Verstellmöglichkeiten einzelner Bauteile der Stelleinrichtung gegenüber der Transportplattform der Greifer in einem definierten Bereich oberhalb der Transportplattform sowie neben der Transportplattform platziert werden kann. Die Ausgestaltung der Stelleinrichtung zur mehrachsigen Verfahrbarkeit des Greifers ermöglicht es dabei, die Position des Greifers unter Verwendung von Linear- oder Rotationsantrieben oder einer Kombination daraus zu bewirken, sodass die Stelleinrichtung konstruktiv einfach und kostengünstig hergestellt werden kann.

Im Falle der bevorzugten Verwendung eines Greifarms ist dieser gelenkig gegenüber der Transportplattform verstellbar, sodass mittels des Greifers die Spinnkanne in einfacher Weise ergriffen und abgesetzt werden kann. Die Verwendung eines Greifarms ermöglicht es ferner, die Stelleinrichtung in einfacher Weise so auszugestalten, dass die Spinnkannen derart senkrecht zur Transportplattform verstellt werden können, dass diese in vereinfachter Weise über benachbarte Spinnkannen oder über Hindernisse hinweggehoben und zuverlässig positioniert werden können. Insbesondere erlaubt es die Verwendung eines Greifarms, die Spinnkanne in einem großen Umfeld um die Transportplattform herum zu positionieren.

Nach einer bevorzugten Weiterbildung der Erfindung ist eine Aufnahmeeinheit vorgesehen, welche auf der Transportplattform angeordnet ist und die Stelleinrichtung gegenüber einer Oberfläche der Transportplattform erhaben lagert. Gemäß dieser bevorzugten Ausgestaltung der Erfindung ist an der Transportplattform eine Aufnahmeeinheit, bspw. in Form eines Rahmens oder Gehäuses angeordnet, welche sich weiter bevorzugt senkrecht zur Ebene der Transportplattform erstreckt. In einem Bereich der Aufnahmeeinheit, deren Abstand von der Transportplattform weiterhin bevorzugt größer ist als die Höhe der mindestens einen Spinnkanne ist, ist die Stelleinrichtung an der Aufnahmeeinheit gelagert. Die Stelleinrichtung kann somit kompakter ausfallen.

Nach einer weiteren bevorzugten Ausführungsform weist die Stelleinrichtung einen einachsig gegenüber der Transportplattform, insbesondere auch gegenüber der Aufnahmeeinheit, verstellbaren Ausleger auf, an dem der Greifer einachsig gegenüber dem Ausleger verstellbar gelagert ist.

Der Ausleger ist vorzugsweise auf der Aufnahmeeinheit angeordnet und erstreckt sich weiter bevorzugt ausgehend von der Aufnahmeeinheit in einer Richtung über die Transportplattform, sodass der entlang des Auslegers verstellbare Greifer über die gesamte Ausdehnung der Transportplattform in Längserstreckung des Auslegers verstellbar ist. Durch die gleichzeitige Verstellbarkeit des Auslegers gegenüber der Aufnahmeeinheit insbesondere quer zur Längsrichtung des Auslegers, wobei die Verstellbarkeit derart ausgelegt ist, dass dadurch der Greifer nicht nur über die gesamte Ausdehnung der Transportplattform quer zum Ausleger, sondern auch darüber hinaus positioniert werden kann, um ein Absetzen bzw. ein Aufnehmen einer Spinnkanne aus einem Bereich neben der Transportplattform zu ermöglichen, wird erreicht, dass der Greifer an einer beliebigen für den Betrieb des Transportfahrzeugs notwendigen Position angeordnet werden kann. Eine Kombination der, insbesondere linearen, Verstellbarkeit des Auslegers gegenüber der Aufnahmeeinheit sowie der, insbesondere linearen Verstellbarkeit, des Greifers gegenüber dem Ausleger gewährleistet eine zuverlässige Positionierung des Greifers an einer zur Aufnahme sowie zum Absetzen einer Spinnkanne gewünschten Position, wobei hierzu der Greifer weiter bevorzugt auch senkrecht zur Ebene der Transportplattform verstellbar an dem Ausleger angeordnet sein kann.

Im Falle der gemäß einer bevorzugten Weiterbildung der Erfindung vorgesehenen Verwendung eines Greifarms ist nach einer weiter bevorzugten Weiterbildung vorgesehen, dass der Greifarm wenigstens einen ersten Greifarmkörper und einen zweiten Greifarmkörper aufweist, die gelenkig miteinander verbunden sind, wobei der erste Greifarmkörper an seinem dem zweiten Greifarmkörper gegenüberliegenden Ende gelenkig mit der Transportplattform oder der Aufnahmeeinheit und der zweite Greifarmkörper an seinem dem ersten Greifarmkörper gegenüberliegenden Ende gelenkig mit dem Greifer verbunden ist.

Gemäß dieser bevorzugten Ausgestaltung der Erfindung weist der Greifarm wenigstens zwei Segmente, nämlich den ersten Greifarmkörper und den zweiten Greifarmkörper auf. Die beiden Greifarmkörper sind gelenkig miteinander verbunden, insbesondere derart, dass diese um eine gemeinsame, sich senkrecht zur Längsachse des ersten Greifarmkörpers und zweiten Greifarmkörpers erstreckenden Achse verschwenkbar sind. Der erste Greifarmkörper ist mit seinem dem zweiten Greifarmkörper gegenüberliegenden Ende seinerseits gelenkig mit der Transportplattform, bevorzugt mit der mit der Transportplattform verbundenen und sich senkrecht zu dieser erstreckenden Aufnahmeeinheit verbunden, wobei die gelenkige Verbindung des ersten Greifarmkörpers mit der Aufnahmeeinheit bzw. der Transportplattform derart ausgestaltet ist, dass der erste Greifarmkörper sowohl um eine sich senkrecht als auch parallel zur Transportplattform erstreckenden Längsachse verschwenkbar ist.

Die gelenkige Verbindung des ersten Greifarmkörpers mit der Aufnahmeeinheit bzw. der Transportplattform sowie die gelenkige Verbindung des ersten Greifarmkörpers mit dem zweiten Greifarmkörper ermöglichen es, den an dem dem ersten Greifarmkörper gegenüberliegenden Ende des zweiten Greifarmkörpers angeordneten Greifer in eine beliebige Position gegenüber der Transportplattform sowie in Abhängigkeit von der Länge des ersten und zweiten Greifarmkörpers neben der Transportplattform anzuordnen. Der Greifer ist dabei seinerseits gelenkig mit dem dem ersten Greifarmkörper gegenüberliegenden Ende des zweiten Greifarmkörpers verbunden, wobei sich die Gelenkachse parallel zur Transportplattform erstreckt, sodass der Greifer unabhängig von der Position des ersten und zweiten Greifarmkörpers parallel zur Transportplattform ausgerichtet werden kann, sodass eine zuverlässige Erfassung und Positionierung der mindestens einen Spinnkanne erfolgen kann.

Eine ergänzende drehgelenkige Verbindung des Greifers mit dem zweiten Greifarmkörper, wobei der Greifer bevorzugt um eine sich senkrecht zur Transportplattform erstreckenden Längsachse verdrehbar mit dem zweiten Greifarmkörper verbunden ist, ermöglicht es zudem, den Greifer derart zu positionieren, dass dessen Greiferelemente nicht mit einem bspw. aus der Spinnkanne herausragenden Faserbandende in Kontakt gelangen kann, wodurch dieses möglicherweise beschädigt wird. Auch kann durch diese Ausgestaltung der Erfindung die ergriffene Spinnkanne einfach um Ihre Längsachse verstellt werden, wodurch die Spinnkanne entsprechend der Positionierung des Faserbandendes ausgerichtet werden kann.

Nach einer bevorzugten Weiterbildung der Erfindung weist der Greifer drei relativ zueinander zwischen einer die Spinnkanne freigebenden Freigabeposition und die Spinnkanne arretierenden Halteposition verstellbare Greiferelemente auf. Die Verwendung von drei Greiferelementen ermöglicht eine zuverlässige Erfassung der Spinnkanne, insbesondere der als Rundkanne ausgebildeten Spinnkanne, wobei die Anordnung der Greiferelemente zueinander sowie die Anzahl der verstellbaren Greiferelemente grundsätzlich frei wählbar sind. Nach einer besonders bevorzugten Ausgestaltung der Erfindung ist vorgesehen, dass die drei Greiferelemente gleichmäßig über einen Umfang verteilt und wenigstens einer der Greiferelemente in radialer Richtung verstellbar an dem Greifer angeordnet ist. Gemäß dieser bevorzugten Ausgestaltung der Erfindung sind alle drei Greiferelemente in radialer Richtung gleichmäßig über den Umfang verteilt, d. h. in Umfangsrichtung in einem Abstand von 120° an dem Greifer angeordnet. Eine Verstellung des wenigstens einen Greiferelementes in radialer Richtung ermöglicht insbesondere, dass Rundkannen, welche einen kreisförmigen Querschnitt aufweisen, besonders zuverlässig durch die Greiferelemente ergriffen und in der Halteposition gehalten und in der Freigabeposition freigegeben werden können, wobei die Greiferelemente in der Halteposition außenseitig an einer Mantelfläche der Spinnkanne zur Anlage gelangend und diese klemmend haltend ausgebildet sind. Nach einer weiter bevorzugten Ausgestaltung sind die Greiferelemente längenverstellbar, also mit einer zur Umfangsrichtung orthogonalen Richtung mit veränderlicher Länge ausgestaltet. So können die Greiferelemente bedarfsgerecht in der Länge angepasst werden, auch um beispielsweise Klemmfläche zur sicheren Aufnahme einer Spinnkanne erhöhen zu können. Weiter bevorzugt können mehr als ein Greiferelement, besonders bevorzugt alle Greiferelemente in radialer Richtung verstellbar an dem Greifer angeordnet und ausgestaltet sein, womit die Handhabung der Spinnkanne verbessert werden kann.

Nach einer alternativ bevorzugten Ausführungsform der Erfindung weist der Greifer ausschließlich zwei relativ zueinander zwischen der die Spinnkanne freigebenden Freigabeposition und die Spinnkanne arretierenden Halteposition verstellbare Greiferelemente auf. Dabei ist insbesondere ein Greiferelement ortsfest an dem Greifer und das andere Greiferelement in Richtung auf den und entgegengesetzt zu dem ortsfesten Greiferelement an dem Greifer linear verstellbar angeordnet. Jedes Greiferelement weist in bevorzugter Weise mindestens eine Kontaktfläche zum Kontaktieren der Spinnkannenseitenwand auf. Die Kontaktflächen sind jeweils in der Dimension derart gewählt, dass die Spinnkanne über die Klemmwirkung der Kontaktflächen bei anliegendem Kontakt zuverlässig getragen werden kann. Die Kontaktflächen weisen insbesondere eine zur Spinnkannenoberflächenkontur kongruente Ausgestaltung auf, um an der Spinnkannenoberfläche über den definierten Flächenabschnitt der Kontaktfläche bündig anliegen zu können. Weiter bevorzugt weist wenigstens einer der beiden Greiferelemente wenigstens zwei Kontaktflächen zum Kontaktieren der Spinnkannenseitenwand auf, wobei die beiden Kontaktflächen zueinander einen definierten Abstand aufweisen. Das Greiferelement kann dadurch kostengünstiger ausgestaltet werden. Das andere Greiferelement kann wenigstens eine Kontaktfläche zum Kontaktieren der Spinnkannenseitenwand umfassen. Dadurch ist zudem wenigstens eine Dreipunktkontaktierung der Spinnkanne möglich, um diese zuverlässig erfassen zu können. Je mehr Kontaktflächen vorgesehen werden, um so besser kann die Spinnkannenerfassung durch den Greifer erfolgen. Bevorzugt ist eine Ausführungsform, bei welcher die beiden Greiferelemente jeweils zwei zueinander beabstandete Kontaktflächen aufweisen. Dies ermöglicht eine konstruktiv günstige Ausgestaltung des Greifers unter Berücksichtigung einer zuverlässigen Erfassung und Handhabung der Spinnkanne durch den Greifer.

Unter einer Kontaktfläche ist ein solcher Flächenabschnitt des Greiferelements zu verstehen, welcher geeignet ist, eine Kontaktierung mit dem zu kontaktierenden Element, in diesem Fall die Spinnkanne, zu ermöglichen. Die Kontaktfläche kann in der Dimensionierung unter Berücksichtigung der auf die Spinnkanne aufbringbaren derartigen Anpresskraft, dass die Spinnkanne beschädigungsfrei von der Manipulatoreinheit handhabbar, insbesondere tragbar, ist, frei gewählt sein. Insbesondere weist die Kontaktfläche eine haftreibende Oberflächenstruktur auf, um eine zuverlässigbare Handhabung durch die Manipulatoreinheit zu gewährleisten. Die haftreibende Oberflächenstruktur kann mit der Kontaktfläche ausgebildet oder auf dieser, insbesondere zerstörungsfrei auswechselbar beispielsweise in Form eines Flächengebildes wie ein Pad, aufgebracht sein.

Nach einer besonders bevorzugten Ausführungsform ist das linear verstellbare Greiferelement über einen Spindelantrieb verstellbar. Der Spindelantrieb ist insbesondere zwischen dem ortsfesten und dem linear verstellbaren Greiferelementen im Bereich eines zwischenliegenden Trägerabschnitts des Greifers angeordnet, welcher einen endseitigen Abschnitt jedes der beiden Greiferelemente trägt. Der Trägerabschnitt kann insbesondere eine Aussparung aufweisen, durch welche das linear verstellbare Greiferelement hindurchragt, um linear verstellbar geführt werden zu können.

Gemäß einer bevorzugten Ausführungsform ist ein Signalgeber an einem der Greiferelemente angeordnet und ausgelegt, eine Kontaktierung beider Greiferelemente mit der Spinnkanne zu signalisieren. Der Signalgeber ist vorzugsweise mit einer Steuereinheit, insbesondere mit der Steuereinheit zur Steuerung der Manipulatoreinheit kommunikativ verbunden, damit eine Greifbewegung des beweglichen Greiferelements bzw. der beweglichen Greiferelemente gestoppt wird, sobald diese die Spinnkannen kontaktieren. Beispielsweise kann der Signalgeber ein Näherungsschalter oder ein Kontaktschalter sein. Letzterer kann insbesondere in einer Kontaktfläche des Greiferelements angeordnet sein.

Nach einer bevorzugten Weiterbildung der Erfindung ist ferner vorgesehen, dass das Transportfahrzeug, die Stelleinrichtung und/oder der Greifer eine Erfassungseinheit zum Erfassen einer Position der Spinnkanne und/oder eines in und/oder an der Spinnkanne angeordneten Faserbandendes aufweist. Die Verwendung einer Erfassungseinheit ermöglicht es, die Position des Faserbandendes in bzw. an der Spinnkanne zu erkennen und den Greifer in entsprechender Weise derart an der Spinnkanne anzuordnen, dass das Faserbandende nicht durch ein Greiferelement des Greifers beschädigt wird. Zudem besteht durch die Kenntnis der Position des Faserbandendes die Möglichkeit, die Spinnkanne derart an einer Faserband gespeisten Spinnereimaschine anzuordnen, dass das Faserbandende in einer zur automatisierten Aufnahme vorgesehenen Position an der Spinnereimaschine positioniert wird. Die Erfassungseinheit kann dabei kamerabasiert bspw. durch das vorstehend beschriebene Erfassungssystem, laserbasiert und/oder sensorbasiert ausgestaltet sein, wodurch eine besonders zuverlässige Erfassung der Position des Faserbandendes in der Spinnkanne gewährleistet werden kann. Beispielsweise kann die mit dem Transportfahrzeug interagierende Spinnkanne nach einer bevorzugten Ausführungsform außenumfänglich einen farbigen Ring oder Abschnitt aufweisen, welcher unter der Spinnkannenöffnung bzw. des Spinnkannenrandes angeordnet ist. Die Farbe des Rings bzw. des Abschnitts ist dabei in bevorzugter Weise derart ausgewählt, dass die Farbe des Faserbandendes zu der Farbe des Ringes bzw. des Abschnitts einen starken Kontrast bildet. Beispielsweise weisen Faserbänder aus Baumwollmaterial eine helle Farbe auf. Für solche Faserbänder eignet sich entsprechend in bevorzugter Weise ein dunkelfarbiger Ring bzw. Abschnitt. Ein über den Spinnkannenrand außenseitig, benachbart zu dem farbigen Ring bzw. dem farbigen Abschnitt herabhängendes Faserbandende kann somit von der Erfassungseinheit in einfacher Weise erfasst werden.

Nach einer bevorzugten Ausführungsform weist die Erfassungseinheit eine Sendeeinheit und eine Empfängereinheit auf, welche bezüglich der Sendeeinheit mit dieser derart interagierend angeordnet ist, dass ein von der Sendeeinheit beaufschlagter Bereich der Spinnkanne von der Empfängereinheit überwacht und sensiert werden kann. Bei der Sendeeinheit kann es sich vorzugsweise um eine Lichtsendeeinheit wie eine Infrarotsendeeinheit oder eine Lasereinheit handeln. Bei der Empfängereinheit kann es sich beispielsweise um eine Lichtempfangseinheit, insbesondere eine Bildverarbeitungseinheit handeln, welche ausgestaltet ist, dass von der Lichtsendeeinheit ausgestrahlte und von der Spinnkanne reflektierte Licht zu erfassen. Die Bildverarbeitungseinheit ist vorzugsweise angeordnet und ausgestaltet, einen definierten Oberflächenabschnitt der Spinnkanne insbesondere nahe einem Randbereich angrenzend zur Spinnkannenöffnung auf die An- und/oder Abwesenheit des Faserbandendes zu überwachen. Die Lichtsendeeinheit ist vorzugsweise ausgestaltet und angeordnet, den von der Bildverarbeitungseinheit zu überwachenden Oberflächenabschnitt der Spinnkanne mit Licht von definierter Wellenlänge zu beaufschlagen.

Weiter bevorzugt sind die Sendeeinheit und die Empfängereinheit entlang einer vertikalen Achse des Transportfahrzeuges beabstandet zueinander mit oder ohne horizontalen Versatz entlang der vertikalen Anordnungsachse bzw. zueinander angeordnet. Weiterhin bevorzugt ist die Sendeeinheit und weiter bevorzugt auch die Empfängereinheit in der Aufnahmeeinheit angeordnet. Alternativ dazu kann die Sendeeinheit in dem Gehäuse des Transportfahrzeuges unterhalb der Aufnahmeeinheit angeordnet sein.

Besonders bevorzugt ist die Sendeeinheit entlang der vertikalen Achse unterhalb der Empfängereinheit mit oder ohne horizontalen Versatz relativ zu der Empfängereinheit angeordnet und als Lichtsendeeinheit derart ausgebildet, dass eine horizontal verlaufende Lichtlinie von definierter Länge und Dicke schräg nach oben, sprich in Richtung der horizontalen Anordnungsebene der Empfängereinheit auf die Spinnkanne abstrahlbar ist. Der Abstrahlwinkel zu der horizontalen Anordnungsebene der Lichtsendeeinheit ist vorzugsweise aus dem Winkelbereich von 15° bis einschließlich 85°, weiter bevorzugt von 20° bis einschließlich 60° ausgewählt. Die mit Blick auf die Empfängereinheit untere Anordnung der Lichtsendeeinheit bewirkt eine parabelförmige Abbildung der Lichtlinie auf der Spinnkannenoberfläche nahe der Spinnkannenöffnung. Dies ist insbesondere bei Rundkannen, also Spinnkannen mit einem runden Querschnitt in horizontaler Ebene, vorteilhaft, da der tiefste Punkt der Parabel zur Spinnkannenmitte entlang einer horizontalen Achse der Spinnkanne kongruent ist.

Die Empfängereinheit ist angeordnet und ausgestaltet, die abgebildete, parabelförmige Lichtlinie zu erfassen und insbesondere der Steuereinheit zur Steuerung der Manipulatoreinheit bereitzustellen. Insbesondere kann es sich bei der Empfängereinheit um eine Bildverarbeitungseinheit, sprich einer Kamera, handeln. Die erfassten Lichtsignale werden von der Steuereinheit ausgewertet, um wenigstens eine exakte Spinnkannenposition an der Textilmaschine und weiter bevorzugt eine Position eines vom Spinnkannenrand herabhängenden Faserbandendes festzustellen, damit die Spinnkanne zuverlässig von der Manipulatoreinheit handbar ist, ohne das Faserbandende zu beeinträchtigen.

Weiterhin bevorzugt ist eine zweite Lichtsendeeinheit vorgesehen, welche besonders bevorzugt in der Anordnungsebene der Empfängereinheit angeordnet ist. Weiter bevorzugt ist die zweite Lichtsendeeinheit unmittelbar benachbart zu der Empfängereinheit und besonders bevorzugt in der vertikalen Anordnungsebene der Lichtsendeeinheit angeordnet. Mit anderen Worten sind die Lichtsendeeinheit und die zweite Lichtsendeeinheit entlang der vertikalen Achse übereinander ohne horizontalen Versatz zueinander angeordnet, wobei die Lichtsendeeinheit unterhalb der zweiten Lichtsendeeinheit positioniert ist. Die Empfängereinheit ist bezüglich der Lichtsendeeinheit mit horizontalen Versatz entlang der vertikalen Achse oberhalb der Lichtsendeeinheit platziert. Diese besonders bevorzugte Ausgestaltung und Anordnung begünstigt neben der exakten Positionserfassung der Spinnkanne eine verbesserte Erfassung wenigstens der Position des Faserbandendes und weiter bevorzugt der Länge des ausgehend vom Spinnkannenrand herabhängenden Faserbandendes. Die erfassten Lichtsignale werden von der Steuereinheit ausgewertet, um eine exakte Spinnkannenposition an der Textilmaschine sowie eine exakte Position des Faserbandendes an der Spinnkanne festzustellen, damit die Spinnkanne zuverlässig von der Manipulatoreinheit handbar ist, ohne das Faserbandende zu beeinträchtigen.

Nach einer weiteren bevorzugten Ausgestaltung der Erfindung ist vorgesehen, dass die Steuereinheit der Manipulatoreinheit in, an oder auf der Aufnahmeeinheit angeordnet ist. Gemäß dieser bevorzugten Ausgestaltung der Erfindung dient die Aufnahmeeinheit nicht allein zur Lagerung der Stelleinrichtung und des Greifers, sondern ist ferner dazu ausgebildet, eine Steuereinheit bzw. Steuerungselektronik der Manipulatoreinheit, vorzugsweise der Stelleinrichtung, insbesondere des Greifers, aufzunehmen bzw. zu tragen. Darüber hinaus besteht ferner die Möglichkeit, die Aufnahmeeinheit zur Anordnung weiterer Komponenten, bspw. einer Kommunikationseinheit zur Verbindung des fahrerlosen Transportfahrzeugs mit der Leitsteuerung sowie einer Steuereinheit des Fahrantriebs zu nutzen, wo diese im Falle eines technischen Defekts gut zugänglich sind.

Gemäß einer weiteren bevorzugten Ausführungsform weist das Transportfahrzeug eine Bedieneinheit auf, mittels welcher ein Bediener wenigstens Einfluss auf die Interaktion der Manipulatoreinheit nehmen kann. Die Bedieneinheit ist dazu mit der Steuereinheit kommunikativ verbunden. Weiter bevorzugt ist die Bedieneinheit mit dem Erfassungssystem kommunikativ verbunden, um bedarfsgerechte Einstellungen vornehmen zu können. Vorzugsweise ist die Bedieneinheit in die Aufnahmeeinheit integriert, an dieser, insbesondere auf der Aufnahmeeinheit angeordnet, wobei die Anordnung der Bedieneinheit derart ist, dass diese für den Bediener zugänglich ist. Beispielsweise kann die Bedieneinheit gemäß der bevorzugten integrierten Anordnung über eine bewegbare Abdeckeinheit verdeckt, aber zugänglich vorgesehen sein. So kann die Bedieneinheit insbesondere aus der Aufnahmeeinheit, weiter bevorzugt über die bewegbare, besonders bevorzugt weggeklappte Abdeckeinheit ausfahrbar in die Aufnahmeeinheit integriert vorgesehen sein.

Nach einer weiteren bevorzugten Ausgestaltung der Erfindung ist ferner vorgesehen, dass das Transportfahrzeug eine Schubeinrichtung mit einem mit der Spinnkanne in Eingriff bringbaren, gegenüber der Transportplattform zwischen einer Ausgangslage und einer Endlage verstellbaren Schubkörper zur bodengleichen Verschiebung der Spinnkanne aufweist.

Mittels des Schubkörpers besteht die Möglichkeit, die durch den Greifer abgesetzte Spinnkanne positionsgerecht zu verschieben. So besteht bspw. die Möglichkeit, eine Spinnkanne von der Transportplattform zu entnehmen, neben der Transportplattform zu positionieren und dann mittels des Schubkörpers in die zum Betrieb einer Faserband gespeisten Spinnereimaschine erforderliche Position zu verschieben. Die Verwendung eines Schubkörpers gewährleistet dabei eine exakte Positionierung der Spinnkanne auch für den Fall, in der der Greifer die Spinnkanne nicht in der vorgesehenen Position absetzen kann.

Gemäß einer besonders bevorzugten Ausgestaltung der Erfindung ist dabei vorgesehen, dass der Schubkörper eine Kopplungseinheit zur lösbaren, zugfesten Verbindung mit der Spinnkanne aufweist. Gemäß dieser Ausgestaltung der Erfindung ist mittels dem Schubkörper nicht nur ein Verschieben durch einen über den Schubkörper aufgebrachten Druck auf die Spinnkanne möglich, sondern durch die Kopplungseinheit besteht ferner die Möglichkeit, die Spinnkanne und den Schubkörper derart zu verbinden, dass der Schubkörper auch Zugkräfte auf die Spinnkanne übertragen kann, sodass bspw. im Falle einer notwendigen Entnahme einer leergelaufenen Spinnkanne an einer Faserband gespeisten Spinnereimaschine über die Kopplungseinheit die Spinnkanne aus ihrer Position an der Spinnereimaschine herausgezogen und in eine Position verstellt werden kann, in der diese durch den Greifer erfasst werden kann.

Die Ausgestaltung der Kopplungseinheit zur lösbaren, zugfesten Verbindung mit der Spinnkanne ist dabei grundsätzlich frei wählbar. Nach einer besonders bevorzugten Ausgestaltung der Erfindung ist vorgesehen, dass die Kopplungseinheit eine Unterdruckeinheit, eine magnetisch, insbesondere elektromagnetisch wirkende und/oder eine rastverbindende Halteeinrichtung aufweist.

Im Falle der bevorzugten Verwendung einer Unterdruckeinheit bewirkt diese aufgrund des Unterdrucks zwischen der Kopplungseinheit und einer Mantelfläche der Spinnkanne eine zugfeste, leicht lösbare Verbindung, sodass mittels des Schubkörpers die Spinnkanne gezogen werden kann. Im Falle der bevorzugten Verwendung einer magnetischen, insbesondere elektromagnetischen Halteeinrichtung wird über die magnetische Verbindung eine zugfeste Verbindung hergestellt, wobei eine elektromagnetisch wirkende Halteeinrichtung über eine geeignete Aktivierung und Deaktivierung in besonders einfacher Weise eine Trennung der Kopplungseinheit von der Spinnkanne ermöglicht. Die Spinnkanne kann zur magnetischen, insbesondere elektromagnetischen Verbindung bspw. an einem entsprechenden Abschnitt der Spinnkanne, ein ferromagnetisches Material, bspw. in Form eines Metallrings, aufweisen. Der Metallring kann weiter bevorzugt eine wie vorstehend beschriebene, vom Faserband abweichende Farbe zur kontrastreichen Abhebung eines über den Spinnkannenrand herabhängenden Faserbandendes bzgl. der Spinnkanne aufweisen.

Die Anordnung des Schubkörpers an dem Transportfahrzeug ist grundsätzlich frei wählbar. Bevorzugt ist eine Anordnung des Schubkörpers an dem Transportfahrzeug derart, dass die Spinnkanne von dem Schubkörper an ihrer vertikalen Mitte oder in einem Bereich um ihre vertikale Mitte bezüglich der Spinnkannenhöhe zwischen Spinnkannenboden und Spinnkannenrand kontaktiert werden kann. Weiter bevorzugt reicht der Bereich von einem 1/4 bis 3/4 der Spinnkannenhöhe ausgehend vom Spinnkannenboden. Noch weiter bevorzugt reicht dieser Bereich von 1/3 bis 2/3 der Spinnkannenhöhe ausgehend vom Spinnkannenboden. Damit kann eine mögliche Kippgefahr beim Schieben bzw. Ziehen der Spinnkanne weitestgehend vermieden werden. Die Verschiebung der Spinnkanne kann dabei beispielsweise mittels definiertes Verfahrens unter gleichzeitigem Kontakt des Schubkörpers mit der Spinnkanne erfolgen.

Nach einer weiteren bevorzugten Ausführungsform ist der Schubkörper an einem Schubkörperträger angeordnet, welcher bspw. mit der Transportplattform verbunden ist und der weiter bevorzugt zur linearen Verstellung des Schubkörpers gegenüber dem Schubkörperträger eine Antriebseinheit aufweist. Die lineare Verstellung erlaubt auch bei Stillstand des Transportfahrzeuges eine definierte Positionierung der Spinnkanne an der Spinnereimaschine.

Nach einer weiteren bevorzugten Ausgestaltung der Erfindung ist vorgesehen, dass der Schubkörper an dem Greifer angeordnet ist. Diese bevorzugte Ausgestaltung der Erfindung ermöglicht es, auf einen Antrieb des Schubkörpers beispielsweise durch Verfahren des Transportfahrzeuges und/oder eines separaten Antriebs im Falle der Anordnung an der Transportplattform zu verzichten. Zur definierten Positionierung der Spinnkanne mittels des Schubkörpers reicht nach dieser bevorzugten Ausführungsform eine Verstellung des Greifers mittels der Stelleinrichtung aus, womit eine zuverlässige Verschiebung der Spinnkanne im Falle der Anlage des Schubkörpers an dieser ermöglicht wird.

Besonders bevorzugt ist der Schubkörper an dem mit zwei Greiferelementen ausgebildeten Greifer nach der vorstehend beschriebenen bevorzugten Ausführungsform angeordnet. Besonders bevorzugt ist der Schubkörper an dem ortsfesten Greifer auf einer der Kontaktfläche abgewandten Seite des ortsfesten Greiferelements platziert. Alternativ bevorzugt kann der Schubkörper an dem linear verstellbaren Greiferelement auf einer der Kontaktfläche abgewandten Seite angeordnet sein. Diese Ausgestaltung ist dahingehend vorteilhaft, dass die Spinnkanne über die lineare Verstellung des linear verstellbaren Greiferelements sehr präzise positionierbar ist.

Gemäß einer bevorzugten Ausführungsform weist das Transportfahrzeug wenigstens einen Abstandssensor auf, der angeordnet und ausgelegt ist, einen Abstand zur Spinnkanne zu erfassen. Damit kann die Handhabung der Spinnkanne zuverlässiger und in verbesserter Weise durch das Transportfahrzeug, insbesondere der Manipulatoreinheit erfolgen. Weiter bevorzugt ist der oder ein Abstandssensor an dem Greifer angeordnet. Dadurch kann die Handhabung der Spinnkanne durch die Manipulatoreinheit verbessert vorgenommen werden. Insbesondere handelt es sich bei dem Abstandssensor um einen Ultraschallsensor.

Die Ausgestaltung der Transportplattform ist grundsätzlich frei wählbar. Nach einer besonders bevorzugten Ausgestaltung der Erfindung ist vorgesehen, dass die Transportplattform zur Aufnahme einer geraden Anzahl an Spinnkannen, insbesondere von mindestens zwei, bevorzugt mindestens vier, besonders bevorzugt mindestens sechs oder acht Spinnkannen ausgebildet ist. Diese Ausgestaltung des fahrerlosen Transportfahrzeugs gewährleistet eine gute Transportkapazität bei einer gleichzeitig kompakten Bauweise, sodass sich das Transportfahrzeug besonders gut rangieren und in eine entsprechende Position gegenüber den Faserband liefernden als auch Faserband gespeisten Spinnereimaschinen manövrieren lässt.

Weiterhin bevorzugt ist die Transportplattform drehtellerartig drehbar bzw. rotierbar ausgestaltet. Damit lässt sich eine Abstellposition der Transportplattform in eine für die Manipulatoreinheit günstige Handhabungsposition verbringen. Unter eine Abstellposition ist die Position auf der Transportplattform zu verstehen, auf welcher eine Spinnkanne abstellbar ist oder abgestellt ist.

Nach einer bevorzugten Ausführungsform weist die Transportplattform zwei Plattformeinheiten auf, von denen insbesondere wenigstens eine rotierbar ausgestaltet ist. Bei der Plattformeinheit handelt es sich in bevorzugter Weise um eine drehtellerartige Plattformeinheit. Weiter bevorzugt ist die Manipulatoreinheit zwischen den beiden Plattformeinheiten angeordnet. Dadurch können die Abstellpositionen jeder Plattformeinheit in verbesserter Weise durch die Manipulatoreinheit erreicht werden.

Das fahrerlose Transportfahrzeug nach der vorliegenden Erfindung eignet sich zur Durchführung eines Kannenwechsels an einer Faserband gespeisten Spinnereimaschine. Nach einem weiteren Aspekt der vorliegenden Erfindung wird ein Verfahren zum Spinnkannenwechsel an einer Spinnereimaschine mittels des fahrerlosen Transportfahrzeuges nach der vorliegenden Erfindung vorgeschlagen. Das Verfahren umfasst im Besonderen die Schritte des Verfahrens des mit mindestens einer mit Faserband befüllten Spinnkanne beladenen fahrerlosen Transportfahrzeuges zu der Spinnereimaschine. An der Spinnereimaschine positioniert sich das Transportfahrzeug vor der auszuwechselnden Spinnkanne. Im Anschluss wird die auszuwechselnde Spinnkanne von dem fahrerlosen Transportfahrzeug aus einer Betriebsposition in eine von der Betriebsposition beabstandete Aufnahmeposition verbracht. Bei der Betriebsposition der Spinnkanne handelt es sich um diejenige Position an der Spinnereimaschine, an der das Faserband aus der Spinnkanne zur weiteren Verarbeitung durch die Spinnereimaschine ungehindert abziehbar ist. Bei der Aufnahmeposition handelt es sich um eine Position, an der die auszuwechselnde Spinnkanne vorzugsweise von dem fahrerlosen Transportfahrzeug oder einer anderen Einheit aufgenommen werden kann.

Nach einer bevorzugten Ausführungsform der vorliegenden Erfindung kann es ggf. erforderlich sein, vor dem Schritt des Verbringens der auszuwechselnden Spinnkanne zunächst eine zwischen der auszuwechselnden Spinnkanne und dem Transportfahrzeug in einer weiteren Betriebsposition angeordnete weitere Spinnkanne mittels des fahrerlosen Transportfahrzeugs aus ihrer weiteren Betriebsposition in eine zu den Betriebspositionen und der Aufnahmeposition unterschiedliche Warteposition zu verbringen. Dies ist beispielsweise dann erforderlich, wenn die Spinnereimaschine auf einer Maschinenlängsseite quer zu ihrer Längsrichtung zwei hintereinander angeordnete Spinnkannen zur Speisung zweier benachbarter Arbeitsstellen der Spinnereimaschine aufweist und die hintere, zu dem Transportfahrzeug entferntere Spinnkanne auszuwechseln ist.

Nachdem ggf. die weitere Spinnkanne von dem fahrerlosen Transportfahrzeug in die Warteposition und die auszuwechselnde Spinnkanne von dem fahrerlosen Transportfahrzeug in die Aufnahmeposition verbracht worden sind, wird in bevorzugter Weise zunächst die weitere Spinnkanne von dem fahrerlosen Transportfahrzeug in die Betriebsposition, also an die Position verbracht, an welcher die auszuwechselnde Spinnkanne zuvor im Betrieb der Spinnereimaschine stand.

Erfindungsgemäß nimmt die Manipulatoreinheit eine mit Faserband befüllte Spinnkanne von der Transportplattform auf und setzt diese neben dem Transportfahrzeug ab. Dieser Schritt kann wahlweise auch vor dem Verbringen der auszuwechselnden Spinnkanne in die Aufnahmeposition und ggf. vor dem Verbringen der weiteren Spinnkanne in die Betriebsposition erfolgen. Dabei ist es jedoch wesentlich, dass die befüllte Spinnkanne an einer Position abgesetzt und bereitgestellt wird, welche das Verbringen der auszuwechselnden und weiteren Spinnkanne in ihre jeweiligen Positionen nicht behindert.

Vor oder nach dem Aufnehmen und Absetzen der befüllten Spinnkanne kann die auszuwechselnde Spinnkanne in bevorzugter Weise auf die Transportplattform mittels der Manipulatoreinheit abgestellt werden. Das Aufnehmen und Absetzen der auszuwechselnden Spinnkanne auf der Transportplattform mittels der Manipulatoreinheit kann vorzugsweise vor oder nach Verbringen der befüllten Spinnkanne in die freie Betriebsposition, welche abhängig von der Anzahl der zu bewegenden Spinnkannen auch die weitere Betriebsposition sein kann, erfolgen. Bevorzugt ist aus Platzgründen jedoch zunächst das Verbringen der auszuwechselnden Spinnkanne in die Aufnahmeposition und das anschließende Aufnehmen und Absetzen der befüllten Spinnkanne neben dem Transportfahrzeug. Weiterhin ist aus Produktivitätsgründen bevorzugt, dass nach dem Absetzen der befüllten Spinnkanne diese zunächst, also vor dem Aufnehmen und Absetzen der auszuwechselnden Spinnkanne auf der Transportplattform, in die freie Betriebsposition verbracht wird, damit die zeitliche Unterbrechung der Produktion an der betroffenen Arbeitsstelle der Spinnereimaschine möglichst geringgehalten werden kann.

Vor, im Zuge des oder nach dem Verbringen der befüllten Spinnkanne in die freie Betriebsposition erfolgt in bevorzugter Weise eine Ausrichtung der befüllten Spinnkanne derart, dass das über dem Spinnkannenrand herabhängende Faserbandende der befüllten Spinnkanne von einem Serviceaggregat der Spinnereimaschine unmittelbar erfasst und der betreffenden Arbeitsstelle zur Wiederaufnahme der Produktion zugeführt werden kann. Dadurch kann die Unterbrechungsdauer weiter reduziert werden.

Ausführungsbeispiele der Erfindung werden nachstehend mit Bezug auf die Zeichnungen erläutert. In den Zeichnungen zeigen:
- Fig. 1: eine schematische, perspektivische Seitenansicht einer ersten Ausführungsform eines fahrerlosen Transportfahrzeugs;
- Fig. 2: eine schematische, perspektivische Draufsicht des fahrerlosen Transportfahrzeugs von Fig. 1 mit einer von einem Greifer gehaltenen Spinnkanne;
- Fig. 3: eine schematische, perspektivische Seitenansicht des Transportfahrzeugs von Fig. 1 mit einem Spinnkannenfreigreifer;
- Fig. 4a: in einer schematischen Darstellung eine Draufsicht auf eine zweite Ausführungsform eines fahrerlosen Transportfahrzeugs;
- Fig. 4b: in einer schematischen Darstellung eine Seitenansicht des fahrerlosen Transportfahrzeugs von Fig. 4a;
- Fig. 5c: in einer schematischen Darstellung eine Draufsicht auf eine dritte Ausführungsform eines fahrerlosen Transportfahrzeugs;

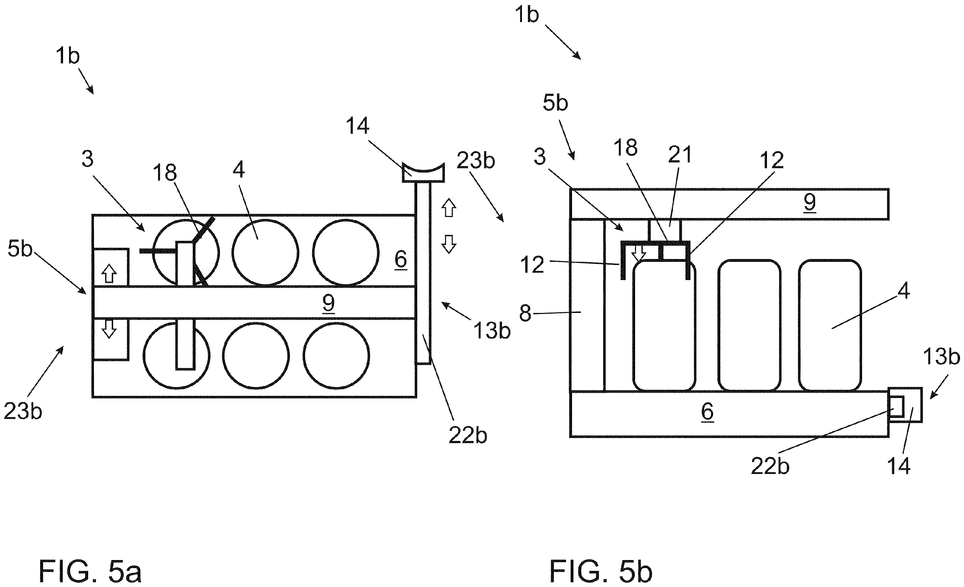

- Fig. 5b: in einer schematischen Darstellung eine Seitenansicht des fahrerlosen Transportfahrzeugs von Fig. 5a;

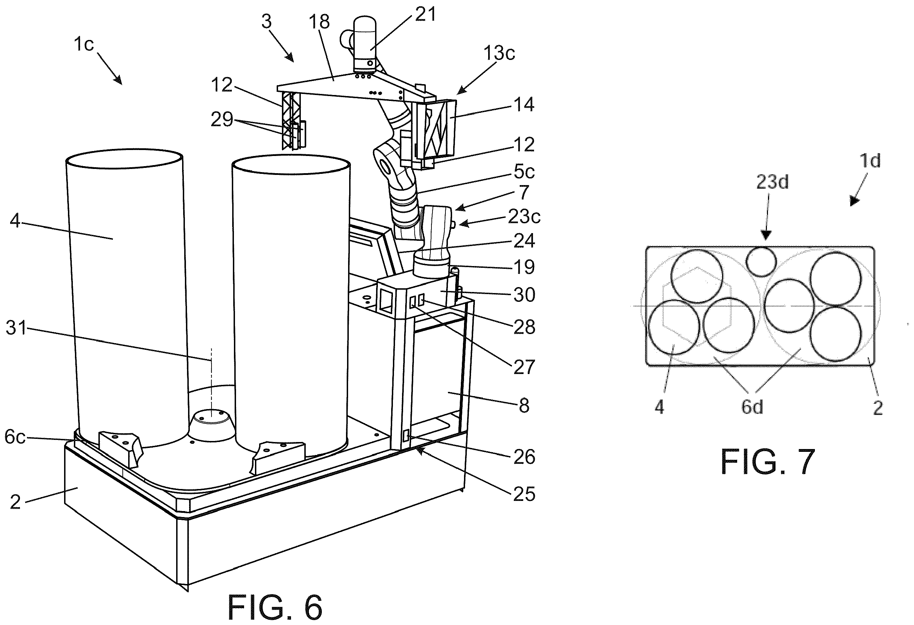

- Fig. 6: in einer schematischen Darstellung eine perspektivische Seitenansicht einer dritten Ausführungsform eines fahrerlosen Transportfahrzeugs;
- Fig. 7: in einer schematischen Darstellung eine Draufsicht einer vierten Ausführungsform eines fahrerlosen Transportfahrzeuges; und

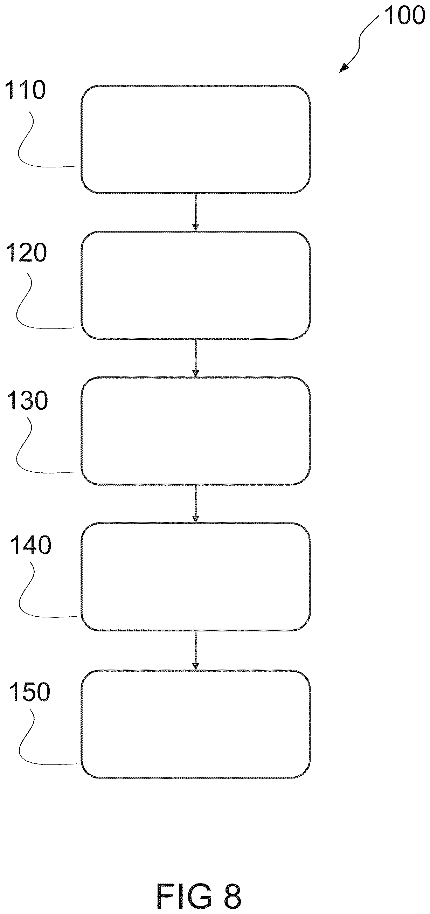

- Fig. 8: eine schematische Darstellung eines Verfahrens zum Spinnkannenwechsel.

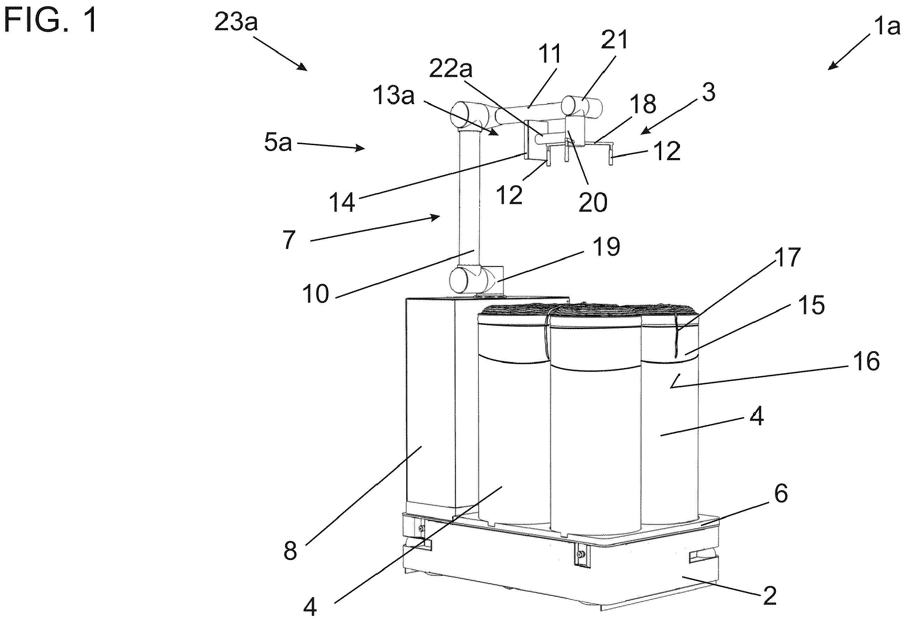

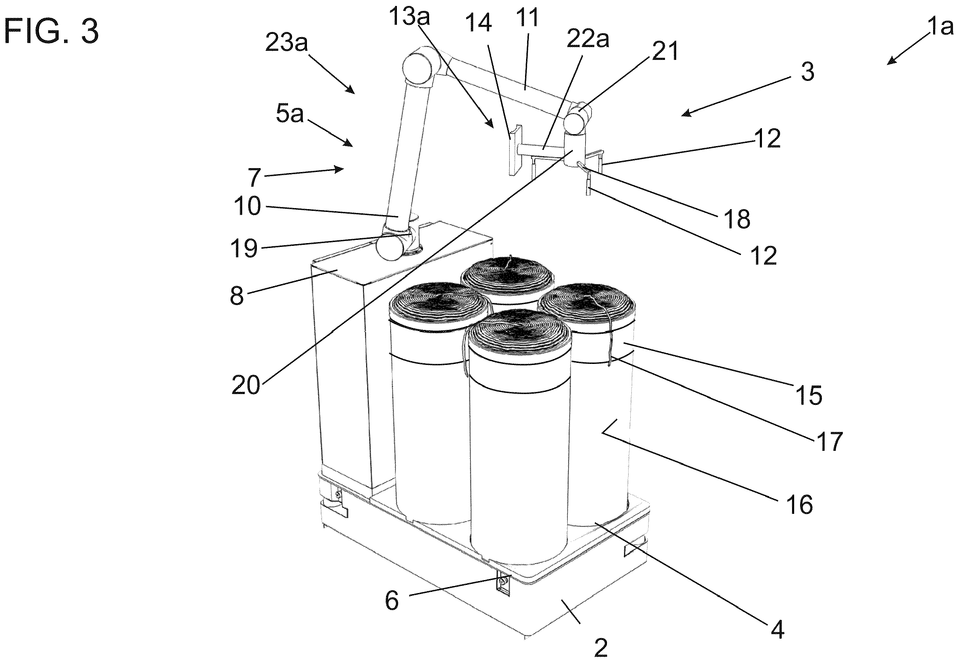

Ein in Figur 1, 2 und 3 dargestelltes fahrerloses Transportfahrzeug 1a weist einen Fahrantrieb 2 sowie eine auf dem Fahrantrieb 2 angeordnete Transportplattform 6 auf, welche zur Aufnahme von vier, als Rundkannen ausgestaltete Spinnkannen 4 ausgebildet ist.

An die Transportplattform 6 außenseitig angrenzend weist das Transportfahrzeug 1a ferner eine sich senkrecht zur Ebene der Transportplattform 6 erstreckende Aufnahmeeinheit 8 auf, welche u. a. zur Aufnahme einer Steuerungselektronik einer Stelleinrichtung 5a einer Manipulatoreinheit 23a sowie zur Aufnahme einer mit einer zentralen Leitsteuerung verbindbaren Fahrzeugsteuerung dient, wobei es sich bei der zentralen Leitsteuerung um eine u. a. den gesamten Produktionsprozess einer hier nicht dargestellten Faserband abliefernden sowie Faserband gespeisten Spinnereimaschine überwachenden sowie steuernden Kontrolleinheit handelt.

An dem der Transportplattform 6 abgewandten Ende ist an der Aufnahmeeinheit 8 ein Greifarm 7 der Stelleinrichtung 5a gelenkig angeordnet. Der Greifarm 7 weist dabei einen ersten Greifarmkörper 10 und einen zweiten Greifarmkörper 11 auf, wobei der erste Greifarmkörper 10 um eine sich parallel zur Ebene der Transportplattform 6 erstreckende Schwenkachse verschwenkbar mit einem an der Aufnahmeeinheit 8 angeordneten Greifarmträger 19 verbunden ist, der seinerseits um eine sich senkrecht zur Ebene der Transportplattform 6 erstreckende Längsachse verdrehbar ist.

An seinem dem Greifarmträger 19 gegenüberliegenden Ende ist der erste Greifarmkörper 10 gelenkig mit einem Ende des zweiten Greifarmkörpers 11 verbunden, wobei der erste Greifarmkörper 10 und der zweite Greifarmkörper 11 um eine sich parallel zur Ebene der Transportplattform 6 erstreckende Schwenkachse zueinander verschwenkbar verbunden sind. An seinem dem ersten Greifarmkörper 10 gegenüberliegenden Ende weist der zweite Greifarmkörper 11 eine Greiferhalterung 21 eines Greifers 3 auf, wobei die Greiferhalterung 21 und der zweite Greifarmkörper 11 wiederum um eine sich parallel zur Ebene der Transportplattform 6 erstreckende Schwenkachse verschwenkbar verbunden sind, sodass ein sich senkrecht zu dieser Schwenkachse erstreckender Greifergrundkörper 20 unabhängig von der relativen Lage des ersten Greifarmkörpers 10 zum zweiten Greifarmkörper 11 senkrecht zur Ebene der Transportplattform 6 ausrichten lässt.

In einer Ebene und senkrecht ausgehend von dem Greifergrundkörper 20 erstrecken sich drei Tragstreben 18, die in Umfangsrichtung im Abstand von 120° voneinander angeordnet sind. An den Tragstreben 18 ist jeweils ein sich senkrecht zu den Tragstreben 18 erstreckendes Greiferelement 12 angeordnet, die jeweils in radialer Richtung entlang der Tragstreben 18 zwischen einer die Spinnkannen 4 ergreifenden Haltepositionen und einer diese freigebende Freigabeposition verstellbar sind.

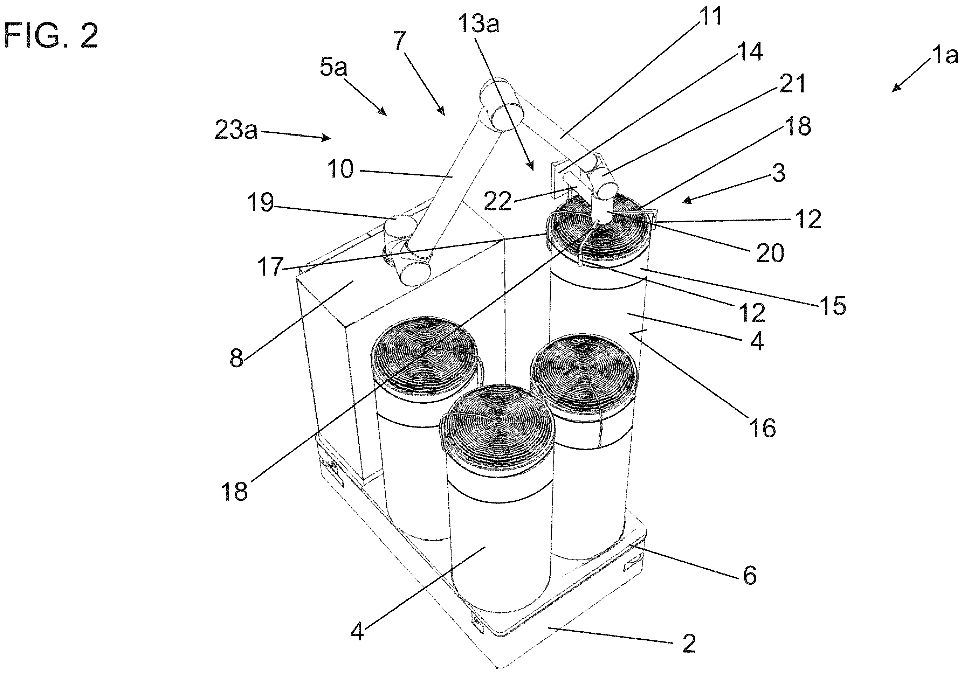

Zur Erfassung einer Spinnkanne 4 wird der Greifer 3 über eine Verstellung des Greifarms 7 in eine Position verstellt, in der durch eine relative Verlagerung der Greiferelemente 12 zueinander die Spinnkanne 4 an ihrem oberen Ende außenseitig ergriffen werden kann (vgl. Figur 2). Über eine weitere Verstellung kann dann, wie in Figur 2 dargestellt, die Spinnkanne 4 von der Transportplattform 6 abgehoben und im Bereich einer Faserband verarbeitenden Spinnereimaschine platziert werden.

Durch eine Verdrehbarkeit des Greifergrundkörpers 20 gegenüber der Greiferhalterung 21 besteht die Möglichkeit, sowohl die Greiferelemente 12 in Umfangsrichtung gegenüber der Spinnkanne 4 auszurichten, als auch die erfasste Spinnkanne 4 um ihre Längsachse zu verdrehen. Damit besteht die Möglichkeit die Spinnkanne 4 entsprechend der Position des Faserbandendes 17 gegenüber der Faserband gespeisten Spinnereimaschine auszurichten.

Zur Endverlagerung der Spinnkanne 4 dient eine Schubeinrichtung 13a, die ein Schubkörper 14, welcher über einen Schubkörperträger 22a mit dem Greifergrundkörper 20 verbunden ist, aufweist. Nach einem Absetzen der Spinnkanne 4 neben der Transportplattform 6 kann anschließend durch den an seine Mantelfläche 16 der Spinnkanne 4 anliegenden Schubkörper 14 die Spinnkanne 4 durch eine Verstellung des Greifarms 7 in ihre vorgesehene Position verschoben werden. In einer hier nicht dargestellten Ausführungsform kann der Schubkörper 14 auch elektromagnetisch ausgebildet sein, sodass bei einer Aktivierung des elektromagnetischen Schubkörpers 14 dieser eine zugfeste Verbindung mit einem an der Mantelfläche 16 im Bereich eines oberen Endes der Spinnkanne 4 angeordneten Metallring 15 aufbaut, sodass dann mittels einer Verstellung des Greifarms 7 die Spinnkanne 4 auch aus ihrer Position herausgezogen werden kann.

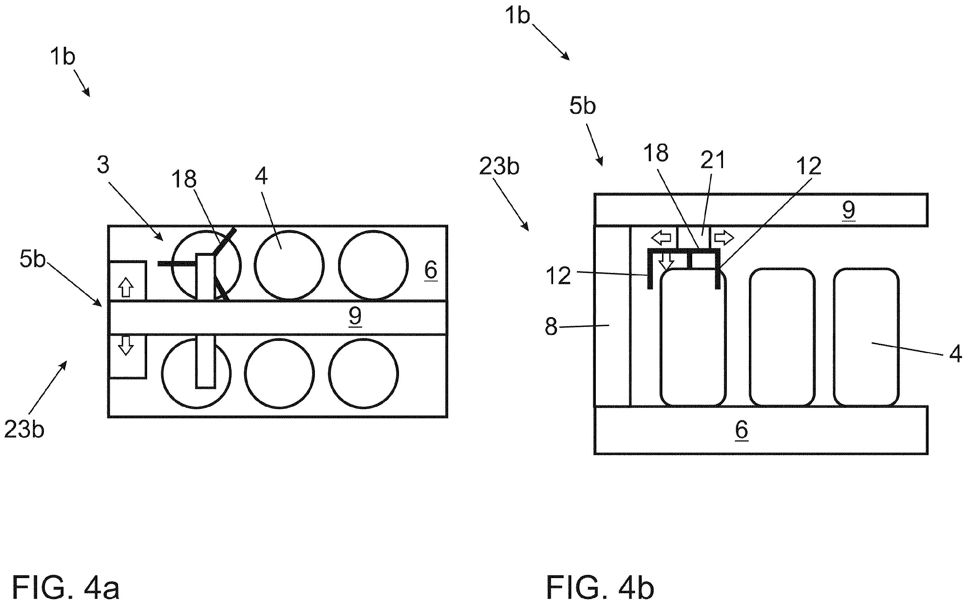

In den Figuren 4a und 4b ist in einer schematischen Darstellung eine weitere Ausführungsform eines Transportfahrzeugs 1b dargestellt. Im Unterschied zu den in den Figuren 1 bis 3 dargestellten Transportfahrzeug 1a ist dieses zur Aufnahme von sechs, als Rundkannen ausgestaltete Spinnkannen 4 ausgebildet. Ferner weist die Stelleinrichtung 5b der Manipulatoreinheit 23b des in den Figuren 4a und 4b dargestellten Transportfahrzeugs 1b einen sich in Längsachsenrichtung über die Transportplattform 6 erstreckenden Ausleger 9 auf, welcher quer zur Längsachsenrichtung des Auslegers 9 verstellbar an der Aufnahmeeinheit 8 angeordnet ist. Der Greifer 3 ist wiederum in Längsachsenrichtung des Auslegers 9 verstellbar, sodass durch eine Kombination der linearen Verstellbarkeit des Auslegers 9 gegenüber der Aufnahmeeinheit 8 und der linearen Verstellbarkeit des Greifers 3 gegenüber dem Ausleger 9, der Greifer 3 zur Erfassung einer Spinnkanne 4 in eine beliebige Position gegenüber der Transportplattform 6 bewegt werden kann. Die Verstellmöglichkeiten des Auslegers 9 gegenüber der Aufnahmeeinheit 8 sind dabei derart ausgebildet, dass nach einem Ergreifen der Spinnkanne 4 durch den Greifer 3 die Spinnkanne 4 seitlich über die Transportplattform 6 hinausbewegt und in einem Bereich neben der Transportplattform 6 abgesetzt werden kann. Hierzu ist der Greifer 3 ferner senkrecht zur Transportplattform 6 verstellbar mit dem Ausleger 9 verbunden.

Das in den Figuren 5a und 5b dargestellte Transportfahrzeug 1b stimmt mit den in den Figuren 4a und 4b dargestellte Transportfahrzeug überein, weist darüber hinaus jedoch im Bereich der Transportplattform 6 zusätzlich eine Schubeinrichtung 13b auf, bei der der Schubkörper 14 gegenüber einem mit der Transportplattform 6 verbundenen Schubkörperträger 22b in Längsachsenrichtung des Schubkörperträgers 22b verstellbar ist, sodass mit dieser Schubeinrichtung 13b eine auf dem Boden angeordnete Spinnkanne 4 verschoben werden kann.

Figur 6 zeigt in einer schematischen Darstellung eine perspektivische Seitenansicht einer weiteren Ausführungsform eines Transportfahrzeugs 1c. Im Unterschied zu dem in den Figuren 1 bis 3 dargestellten Transportfahrzeug 1a ist die Transportplattform 6c rotierbar um ihre Mittenachse 31 ausgebildet. Es sind bei dieser bevorzugten Ausführungsform vier Abstellpositionen 32 für die Spinnkannen 4 um die Mittenachse 31 gleichverteilt vorgesehen. Dargestellt ist die Abstellung von zwei gegenüberliegend angeordneten Spinnkannen 4, während die in Rotationsrichtung der Transportplattform 6c dazwischenliegenden Abstellpositionen frei sind. Die Transportplattform 6c ist ausgelegt, sowohl im Uhrzeigersinn als auch gegen den Uhrzeigersinn zu rotieren. Die rotierbare Ausgestaltung der Transportplattform 6c ermöglicht, dass eine zu entnehmende Spinnkanne 4 bzw. eine Abstellposition zum Abstellen einer Spinnkanne 4 auf der Transportplattform 6c direkt der Manipulatoreinheit 23c zugestellt werden.

Das Transportfahrzeug 1c unterscheidet sich ferner in der Ausgestaltung der Manipulatoreinheit 23c mit seiner Stelleinrichtung 5c sowie des daran angekoppelten Greifers 3. Die Manipulatoreinheit 23c ist auf einem Podest 30 angeordnet, welche auf einer oberen Seite der Aufnahmeeinheit 8 angeordnet ist. Dadurch kann der Greifarmträger 19 in der Höhe kleiner dimensioniert werden. Die Stelleinrichtung 5c ist vierachsig ausgestaltet, um den Greifer 3 exakter im Raum bewegen zu können. Der Greifer 3 ist mit zwei Greiferelementen 12 ausgestaltet, wobei eines der beiden Greiferelemente 12 ortsfest und das andere Greiferelement 12 linear verstellbar entlang einer die Greiferelemente 12 tragenden Tragstrebe 18 an diesem insbesondere endseitig angeordnet sind. Die Tragstrebe 18 wird von einer Greiferhalterung 21 rotierbar getragen. Das verstellbare Greiferelement 12 ist in Figur 6 in einer Endlage gezeigt, in welcher der Greifer 3 die größte Öffnungsweite zwischen den beiden Greiferelementen 12 aufweist. Das verstellbare Greiferelement 12 ist mittels eines in der Tragstrebe 18 angeordneten Stellantriebs, insbesondere eines Spindelantriebs, in Richtung auf das ortsfeste Greiferelement 12 und in eine dazu entgegengesetzte Richtung bis zur gezeigten Endlage linear verstellbar.

Beide Greiferelemente 12 weisen auf ihren einander zugewandten Seiten jeweils zwei Kontaktflächen 29 auf, welche zum Kontaktieren der Seitenwand der Spinnkanne 4 ausgebildet und angeordnet sind. Dargestellt sind hier die an dem linear verstellbaren Greiferelement 12 angeordneten Kontaktflächen 29. Die Kontaktflächen 29 umfassen nicht dargestellte Flächengebilde mit Haftreibstrukturen, die zerstörungsfrei auswechselbar an den jeweiligen Kontaktflächen 29 angebracht sind, um die Spinnkanne 4 mittels der Manipulatoreinheit 23c in verbesserter Art und Weise greifen und klemmend über die Haftreibungswirkung tragen zu können.

Das ortsfeste Greiferelement 12 umfasst auf seiner der Kontaktflächen 29 abgewandten Seite eine Schubeinrichtung 13c mit einem Schubkörper 14, der ortsfest an dem ortsfesten Greiferelement 12 befestigt ist. Die Schubeinrichtung 13c ist als Unterdrucksystem ausgestaltet, wobei der Schubkörper 14 einen Unterdruckkasten mit einer umlaufenden Dichtlippe ausformt, welche dichtend an die Oberfläche der Seitenwand der Spinnkanne 4 anlegbar ist. Durch Anlegen eines Unterdruckes kann die Spinnkanne 4 zuverlässig an den Schubkörper 14 angebunden und in verbesserter zuverlässiger Weise zur exakten Positionierung definiert verschoben werden. Die Unterdruckquelle ist bei dieser bevorzugten Ausführungsform in der Aufnahmeeinheit 8 angeordnet, wobei die von der Unterdruckquelle zu dem Schubkörper 14 führende Unterdruckleitung nach dieser bevorzugten Ausführungsform innerhalb der Stelleinrichtung 5c, den angekoppelten Greifer 3 und seiner Tragstrebe 18 angeordnet ist. Gleiches gilt für die elektrischen Leitungen zur Versorgung des Stellantriebes mit Energie und Steuersignalen.

Das linear verstellbare Greiferelement 12 weist zwischen seinen beiden Kontaktflächen 29 einen nicht dargestellten Signalgeber zum Signalisieren eines Kontaktes mit der Spinnkanne 4 auf. Bei dem Signalgeber kann es sich vorzugsweise um einen Näherungsschalter oder einen Kontaktschalter handeln. Sobald der Signalgeber sein Signal absetzt, wird eine Zustellbewegung des linear verstellbaren Greiferelements 12 gestoppt, um eine Beschädigung der Spinnkanne 4 beispielsweise durch zu hohen Druck zu vermeiden.

Der Greifer 3 ist ferner mit einem nicht dargestellten Abstandssensor versehen, welcher bei dieser bevorzugten Ausführungsform benachbart zu dem Schubkörper 14 angeordnet ist. Der Abstandssensor ist ausgebildet und angeordnet, um einen Abstand zwischen Greifer 3, insbesondere des Schubkörpers 14, und der Spinnkanne 4 zu messen, damit der Greifer 3 geeignet angesteuert werden kann. Bei dem Abstandssensor kann es sich beispielsweise um einen Ultraschnellsensor handeln.

Das Transportfahrzeug 1c ist des Weiteren mit einer Erfassungseinheit 25 zum Erfassen einer Position der Spinnkanne 4 sowie zum Erfassen eines von dem Spinnkannenrand herabhängenden Faserbandendes 17 ausgestattet. Die Erfassungseinheit 25 umfasst eine erste Lichtsendeeinheit 26, eine zweite Lichtsendeeinheit 27 sowie eine Empfängereinheit 28. Die erste Lichtsendeeinheit 26 ist in der Aufnahmeeinheit 8 in einem unteren Abschnitt und die zweite Lichtsendeeinheit 27 ist in der Aufnahmeeinheit 8 entlang einer vertikalen Achse der Aufnahmeeinheit 8 in einem oberen Bereich der Aufnahmeeinheit 8 oberhalb der ersten Lichtsendeeinheit 26 angeordnet. Die Empfängereinheit 28 ist in einer horizontalen Anordnungsebene der zweiten Lichtsendeeinheit 27 benachbart zu dieser in der Aufnahmeeinheit 8 positioniert. Die erste 26 und zweite Lichtsendeeinheit 27 sind jeweils ausgebildet, eine horizontale Lichtlinie von definierter horizontaler Länge und vertikaler Dicke auszusenden, wobei die von der ersten Lichtsendeeinheit 26 abgestrahlte Lichtlinie nach oben unter einem Abstrahlwinkel von 45° zu der horizontalen Anordnungsebene der ersten Lichtsendeeinheit 26 abgestrahlt wird. Dadurch kann auf der Oberfläche der Spinnkanne 4 eine parabelförmige Lichtlinie abgebildet werden, wobei insbesondere bei einer als Rundkanne ausgebildete Spinnkanne 4 der tiefste Punkt der Parabel zur Spinnkannenmitte entlang einer horizontalen Achse der Spinnkanne 4 kongruent ist, womit sich die Spinnkannenmitte exakt erfassen lässt, um eine Positionierung vor der Spinnkanne 4 in verbesserter Weise vornehmen zu können. Die Lichtlinie des zweiten Lichtsenders 27 wird in etwa als horizontale Linie auf der Oberfläche der Spinnkanne 4 abgebildet und ermöglicht die Erfassung des Faserbandendes, welche von einem Spinnkannenrand außenseitig herabhängt. Die Anordnungshöhe des zweiten Lichtsenders 27 an der Aufnahmeeinheit 8 ist vorzugsweise derart gewählt, dass diese einer Höhe des Spinnkannenrandbereichs vom Boden entspricht, in welchem ein Faserbandende üblicherweise bei Herabhängen vom Spinnkannenrand hineinreicht.

Die jeweiligen Lichtlinien werden von der Empfängereinheit 28 erfasst, sobald diese beispielsweise auf die Oberfläche der Spinnkanne 4 treffen und von dieser reflektiert werden. Bei der Empfängereinheit 28 kann es sich um eine Kamera handeln. Die erfassten Signale der entsprechenden Lichtlinien werden einer Steuereinheit der Manipulatoreinheit bereitgestellt, welche aus den erfassten Signalen eine Position der Spinnkanne 4 sowie die An- bzw. Abwesenheit eines von dem Spinnkannenrand herabhängenden Faserbandendes in dem bestrahlten und überwachten Bereich auswertet, um die Manipulatoreinheit 23c zur definierten Handhabung der Spinnkanne 4 anzusteuern.

Auf der Aufnahmeeinheit 8 ist eine Bedieneinheit 24 angeordnet, über welche die Manipulatoreinheit 23c und das Transportfahrzeug 1c von einem Bediener bedienbar und/oder einstellbar ist.

Mit Figur 7 ist in einer schematischen Darstellung eine Draufsicht einer vierten Ausführungsform eines fahrerlosen Transportfahrzeuges 1d gezeigt. Im Unterschied zu den vorherig beschriebenen Transportfahrzeugen 1a - 1c weist das Transportfahrzeug 1d zwei koaxial angeordnete, rotierbare Transportplattformen 6d zum Tragen von jeweils drei Spinnkannen 4 auf, wobei die Manipulatoreinheit 23d in einem Zwickel der beiden rotierbaren Transportplattformen 6d angeordnet ist.

Figur 8 zeigt eine schematische Darstellung eines Verfahrens 100 zum Spinnkannenwechsel. Zunächst wird ein mit mindestens einer mit Faserband befüllte Spinnkanne 4 beladenes fahrerloses Transportfahrzeuges 1a, 1b, 1c, 1d nach einem der vorhergehenden Ausführungsformen zu einer Spinnereimaschine verfahren (Schritt 110). Das fahrerlose Transportfahrzeug 1a, 1b, 1c, 1d wird in einem anschließenden Schritt 120 an der Spinnereimaschine vor der auszuwechselnden Spinnkanne 4 positioniert. Dabei kann die exakte Positionierung des Transportfahrzeuges 1a, 1b, 1c, 1d mittels einer wie vorbeschriebenen Erfassungseinheit 25 umfassend wenigstens den ersten Lichtsender 26 und die Empfängereinheit 28 erfolgen. Die auszuwechselnde Spinnkanne 4 wird in einem anschließenden Schritt 130 mittels des fahrerlosen Transportfahrzeuges 1a, 1b, 1c, 1d aus einer Betriebsposition in eine von der Betriebsposition beabstandete Aufnahmeposition verbracht, entweder dort positioniert bis die Betriebsposition mit einer befüllten Spinnkanne 4 besetzt ist oder alternativ im Anschluss an das Verbringen bis in die Aufnahmeposition auf einen freien Platz auf der Transportplattform 6, 6c, 6d mittels der Manipulatoreinheit 23a, 23b, 23c, 23d platziert. Das Verbringen kann dabei insbesondere mittels eines wie vorbeschriebenen Schubkörpers 14 erfolgen, welcher nach Kontaktierung der Spinnkannenoberfläche mit Unterdruck beaufschlagt wird, um die Spinnkanne 4 an dem Schubkörper 14 zu fixieren. Mittels Bewegung des Schubkörpers 14 über die Stelleinrichtung 5c und den Greifer 3 kann die Spinnkanne 4 exakt in die Aufnahmeposition verbracht werden. Die mit Faserband befüllte Spinnkanne 4 wird in einem Schritt 140 mittels der Manipulatoreinheit 23a, 23b, 23c, 23d von der Transportplattform 6, 6c, 6d aufgenommen und neben dem fahrerlosen Transportfahrzeug 1a, 1b, 1c, 1d abgesetzt. Die abgesetzte, befüllte Spinnkanne 4 wird in einem weiteren Schritt 150 in die freie Betriebsposition mittels des fahrerlosen Transportfahrzeuges 1a, 1b, 1c, 1d verbracht. Das Verbringen der Spinnkanne 4 in die Betriebsposition kann in einer wie das Verbringen in die Aufnahmeposition äquivalenten Art und Weise mittels des Schubkörpers 14 erfolgen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichenliste

- 1a, 1b, 1c, 1d: Transportfahrzeug
- 2: Fahrantrieb
- 3: Greifer
- 4: Spinnkanne
- 5a, 5b, 5c: Stelleinrichtung
- 6, 6c, 6d: Transportplattform
- 7: Greifarm
- 8: Aufnahmeeinheit
- 9: Ausleger
- 10: erster Greifarmkörper
- 11: zweiter Greifarmkörper
- 12: Greiferelemente
- 13a, 13b, 13c: Schubeinrichtung
- 14: Schubkörper
- 15: Metallring
- 16: Mantelfläche
- 17: Faserbandende
- 18: Tragstrebe
- 19: Greifarmträger
- 20: Greifergrundkörper
- 21: Greiferhalterung
- 22a, 22b, 22c: Schubkörperträger
- 23a, 23b, 23c, 23d: Manipulatoreinheit
- 24: Bedieneinheit
- 25: Erfassungseinheit
- 26: erste Lichtsendeeinheit
- 27: zweite Lichtsendeeinheit
- 28: Empfängereinheit
- 29: Kontaktfläche
- 30: Podest
- 31: Mittenachse
- 32: Abstellposition

## Patentansprüche

1. Fahrerloses Transportfahrzeug (1a, 1b, 1c, 1d) zum autonomen Transport und Wechseln mindestens einer Spinnkanne (4), mit
- einem autonomen Fahrantrieb (2),
- einer Transportplattform (6, 6c, 6d) zur Aufnahme der mindestens einen Spinnkanne (4), und
- einer autonomen Manipulatoreinheit (23a, 23b, 23c, 23d) zum Aufnehmen und Absetzen der mindestens einen Spinnkanne (4), wobei die Manipulatoreinheit (23a, 23b, 23c, 23d) einen Greifer (3) zur Erfassung der Spinnkanne (4) und eine Stelleinrichtung (5a, 5b) zur Verstellung des Greifers (3) aufweist.

2. Fahrerloses Transportfahrzeug (1a, 1b, 1c, 1d) nach Anspruch 1, **gekennzeichnet durch** eine Aufnahmeeinheit (8), welche auf der Transportplattform (6) angeordnet ist und die Manipulatoreinheit (23a, 23b, 23c, 23d) sowie eine mit der Manipulatoreinheit (23a, 23b, 23c, 23d) kommunikativ verbundene Bedieneinheit (25) zur Bedienung durch einen Bediener wenigstens der Manipulatoreinheit (23a, 23b, 23c, 23d) gegenüber einer Oberfläche der Transportplattform (6) erhaben lagert.

3. Fahrerloses Transportfahrzeug (1a, 1b, 1c, 1d) nach Anspruch 1 oder 2, **dadurch gekennzeichnet, dass** eine Steuereinheit der Manipulatoreinheit (23a, 23b) in, an oder auf der Aufnahmeeinheit (8) angeordnet ist.

4. Fahrerloses Transportfahrzeug (1a, 1b, 1c, 1d) nach einem oder mehreren der vorhergehenden Ansprüche, **dadurch gekennzeichnet, dass** die Manipulatoreinheit (23a, 23b, 23c, 23d) durch einen kollaborierenden Roboter (Cobot) ausgebildet ist, wobei die Stellenrichtung (5a, 5b) durch einen Roboterarm und der Greifer (3) durch eine Roboterhand des Cobots ausgebildet ist.

5. Fahrerloses Transportfahrzeug (1a, 1b, 1c, 1d) nach einem oder mehreren der vorhergehenden Ansprüche, **dadurch gekennzeichnet, dass** der Greifer (3) zwei Greiferelemente (12) umfasst, wobei einer der beiden Greiferelemente (12) ortsfest und der andere der beiden Greiferelemente (12) in Richtung des ortsfesten Greiferelements (12) und von diesem weg linear verstellbar an einer Tragstrebe (18) des Greifers (3) angeordnet sind, um im Zuge der Verstellung eine die Spinnkanne (4) freigebende Freigabeposition und die Spinnkanne (4) arretierende Halteposition einzunehmen.

6. Fahrerloses Transportfahrzeug (1a, 1b, 1c, 1d) nach Anspruch 5, **dadurch gekennzeichnet, dass** jedes Greiferelement (12)jeweils wenigstens zwei Kontaktflächen (29) zum Kontaktieren der Spinnkanne (4) aufweist, wobei die Kontaktflächen (29) eines Greiferelements (12) zueinander beabstandet an dem jeweiligen Greiferelement (12) angeordnet sind, wobei wenigstens eine der Kontaktflächen (29) pro Greiferelement (12) eine haftreibende Struktur zum Kontaktieren der Spinnkanne (4) aufweist.

7. Fahrerloses Transportfahrzeug (1a, 1b, 1c, 1d) nach Anspruch 5 oder 6, **gekennzeichnet durch** einen Signalgeber, welcher an einem der Greiferelement (12) angeordnet und ausgelegt ist, eine Kontaktierung der Greiferelemente (12) zu signalisieren.

8. Fahrerloses Transportfahrzeug (1a, 1b, 1c, 1d) nach einem der Ansprüche 5 bis 7, **gekennzeichnet durch** eine an dem Greifer (3) angeordnete Schubeinrichtung (13a, 13c) mit einem mit der mindestens einen Spinnkanne (4) in Eingriff bringbaren Schubkörper (14) zur bodengleichen Verschiebung der Spinnkanne (4).

9. Fahrerloses Transportfahrzeug (1a, 1b) nach Anspruch 8, **dadurch gekennzeichnet, dass** der Schubkörper (14) eine Kopplungseinheit zur lösbaren zugfesten Verbindung mit der Spinnkanne (4) aufweist, wobei die Kopplungseinheit eine Unterdruckeinheit aufweist, welche insbesondere an dem ortsfesten Greiferelement (12) auf einer dem verstellbaren Greiferelement (12) abgewandten Seite angeordnet ist.

10. Fahrerloses Transportfahrzeug (1a, 1b, 1c, 1d) nach einem oder mehreren der vorhergehenden Ansprüche, **dadurch gekennzeichnet, dass** die Aufnahmeeinheit (8) eine Erfassungseinheit (25) zum Erfassen einer Position der Spinnkanne (4) und/oder eines in der mindestens einen Spinnkanne (4) angeordneten Faserbandendes (17) aufweist.

11. Fahrerloses Transportfahrzeug (1a, 1b, 1c, 1d) nach Anspruch 10, **dadurch gekennzeichnet, dass** die Erfassungseinheit (25) zur kamerabasierten, laserbasierten und/oder sensorbasierten Erfassung der Position der Spinnkanne (4) und/oder des Faserbandendes (17) in der Spinnkanne (4) ausgebildet ist.

12. Verfahren zum Spinnkannenwechsel an einer Spinnereimaschine umfassend die Schritte
- des Verfahrens (110) eines mit mindestens einer mit Faserband befüllten Spinnkanne (4) beladenen fahrerlosen Transportfahrzeuges (1a, 1b, 1c, 1d) nach einem der vorhergehenden Ansprüche zu der Spinnereimaschine,
- des Positionierens (120) des fahrerlosen Transportfahrzeugs (1a, 1b, 1c, 1d) an der Spinnereimaschine vor der auszuwechselnden Spinnkanne (4),
- des Verbringens (130) der auszuwechselnden Spinnkanne (4) mittels des fahrerlosen Transportfahrzeuges (1a, 1b, 1c, 1d) aus einer Betriebsposition in eine von der Betriebsposition beabstandete Aufnahmeposition,
- des Aufnehmens (140) der mit Faserband befüllten Spinnkanne (4) mittels der Manipulatoreinheit (23a, 23b, 23c, 23d) von der Transportplattform (6) und des Absetzens dieser neben dem fahrerlosen Transportfahrzeug (1a, 1b, 1c, 1d),
- des Verbringens (150) der abgesetzten, befüllten Spinnkanne (4) in die freie Betriebsposition mittels des fahrerlosen Transportfahrzeuges (1a, 1b, 1c, 1d).
